# EUROPEAN PATENT APPLICATION

(11) **EP 0 557 077 A1**
(43) Date of publication of application: **25.08.1993**
(21) Application number: 93301159.5
(22) Date of filing: 17.02.1993
(51) Int. Cl.: G06F 9/38

(54) **Method for switching between memory management modes**

(30) Priority: 21.02.1992 JP 34842/92
(71) Applicant: International Business Machines Corporation, Armonk, N.Y. 10504 (US)
(72) Inventor: Kawano, Seiichi, Machida-shi, Tokyo-to (JP); Komiyama, Hirohide, Zama-shi, Kanagawa-ken (JP); Mukohyama, Shuichi, Yamato-shi, Kanagawa-ken (JP)
(74) Representative: Burt, Roger James, Dr.

(57) **Abstract**

In a data processing system with a CPU having plural address generation modes, normal execution of a transition between the address generation modes is performed by a method avoiding incorrect addressing.

An instruction to be executed immediately after the execution of an instruction for transiting address generation modes is preread and retained (14) in a prefetch queue until the time when the instruction for transiting the address generation modes is executed, so that an incorrect instruction is prevented from being prefetched and executed instead of the instruction to be executed immediately after the mode transition or control is prevented from being transferred to an incorrect address.

## Description

The present invention relates to a data processing system, and more particularly to a method for transiting address generation modes in a data processing system with a CPU having plural said address generation modes.

The central processing units (CPU) of some personal computers, provide two or more address generation modes (addressing modes). For example, a CPU known as the Intel 386 (a trademark of Intel) has address generation modes called a real mode and a protect mode. The protect mode is divided into a mode (paging protect mode) using a paging function and a mode not using the paging function. In the real mode, a value obtained from shifting a value of a CS (Code Selector) register by four bits to the left is added to a value of an IP (Instruction Pointer) register to generate a physical address. In the protect mode, a value of the CS is used as a pointer which points to a segment descriptor in a segment descriptor table. The segment descriptor table is formed in system memory. A base address contained in the segment descriptor pointed to by the CS is added to a value of the IP to generate a physical address. The paging function is performed only in the protect mode. In page conversion, an address (linear address) before the page conversion is converted to a physical address by specifying a page table and an offset in the page table.

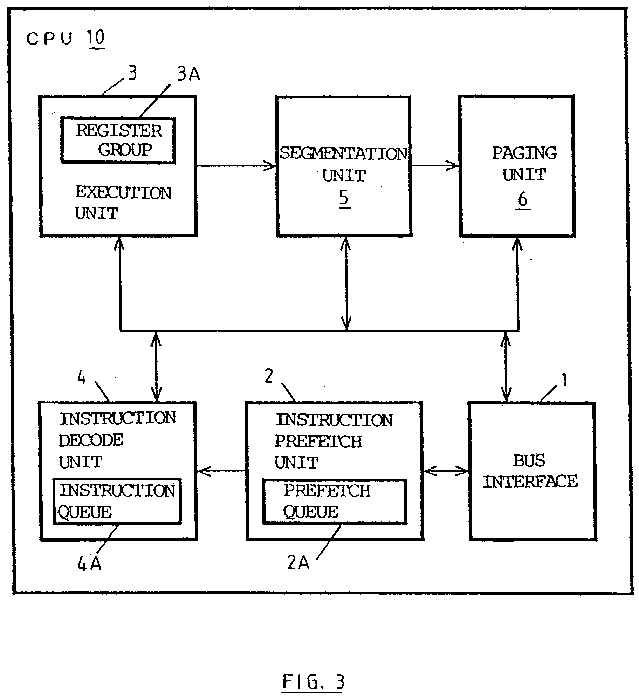

Figure 3 is a block diagram of a 386 CPU 10, which is seen to comprise six functional units. A bus interface unit 1 is an interface between the inside and outside of the CPU 10 and accepts a fetch request from an instruction prefetch unit 2 and an execution unit 3. The instruction prefetch unit 2 prefetches an instruction by using the bus interface unit 1 when the latter is not involved in a bus cycle. The prefetched instruction is stored in a prefetch queue 2A of 16-byte length and waits for processing by the execution unit 3. Since the priority of bus access for prefetch is lower than that of data transfer preceded by the execution of an instruction by the execution unit 3, the execution of the instruction would not be delayed even if a prefetch function is provided. In the case where data transfer does not occur, if the prefetch queue 2A is not full of prefetched instructions, the instruction prefetch unit 2 prefetches an instruction using a bus cycle. On the other hand, if the prefetch queue 2A is full of prefetched instructions, the CPU becomes idle.

An instruction decode unit 4 takes an instruction from the prefetch queue 2A and decodes it to a microcode. The decoded instruction is stored in an instruction queue 4A and waits for processing by the execution unit 3. Up to three instructions can be stored in the instruction queue 4A. The execution unit 3 executes an instruction stored in the instruction queue 4A. A segmentation unit 5 converts a logical address formed by the contents of the CS (Code Selector) and the IP (Instruction Pointer), following instructions from the execution unit 3, to a 32-bit linear address. The CS and the IP are a part of a register group 3A in the execution unit 3. If the paging function is effective, a paging unit 6 converts the linear address to a physical address. However, if the paging is not effective, such conversion is not needed since the linear address is the same as the physical address. The paging unit 6 passes the physical address to the bus interface unit 1.

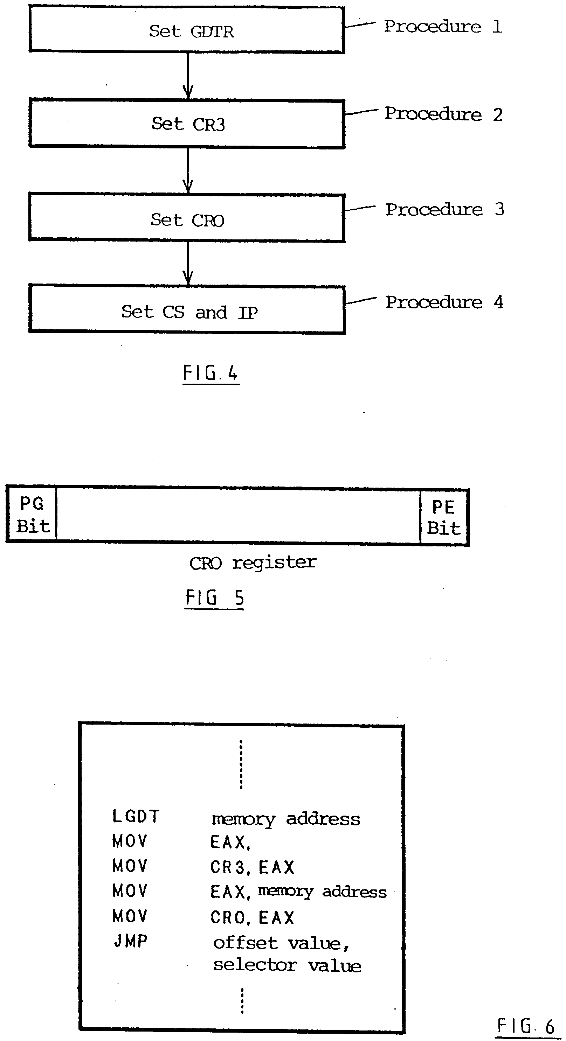

In the above mentioned CPU 10, the following procedures are required to transit from the real mode to the paging protect mode. As shown in Fig.4, the first procedure sets up a GDTR (Global Description Table Register). This sets a pointer to a GDT (Global Description Table) in the GDTR. The second procedure sets up a CR3 (one of the control registers). This sets a pointer to a page conversion table in the CR3. The third procedure sets up a CRO (one of the control registers). This enables both a PE bit and a PG bit of the CRO register, as shown in Fig.5. The fourth procedure sets the CS and the IP to valid values. Thereby, the prefetch queue 2A is flushed by a JMP (unconditional jump) instruction to set the CS and the IP to valid values. A series of instructions for performing such procedure are shown in Fig.6. In Fig.6, "LGDT memory address" is an instruction for writing the pointer to the GDT to the GDTR. "MOV EAX, memory address" and "MOV CR3,EAX" preceded by it are instructions for moving a value to be set to the CR3 register to an EAX register from the memory and then transferring it to the CR3 register to set the CR3 register. "MOV EAX, memory address" and "MOV 4CRO,EAX" preceded by it are instructions for moving a value to be set to the CR3 register to the EAX register from the memory and then transferring it to the CRO register to set the CRO register. When this instruction enables both of the PR and PG bits of the CRO register, address generation transits to the paging protect mode from a mode other than the paging protect mode. The CRO and CR3 registers, etc., are a part of the register group 3A.

The fourth procedure sets the CS and IP to a valid value. "JMP offset value, selector value" flushes the prefetch queue 2A to set the CS and IP to a valid value. In the above procedures for transiting an address generation mode, even if both of the PE and PG bits of the CRO register are enabled, transition of the address generation mode is not completed. To ensure that the address generation mode is completely transited, the "JMP offset value, selector value" must be just executed.

Incidentally, to normally transit such address generation modes from one to another, it is required to satisfy both of the following two conditions, that is, (a) a linear address accords with a physical address and (b) a page for the linear address exists (the address to be fetched resides in real memory). This is possible or a program such as an operating system (OS) which performs memory control to satisfy the above conditions, but it is impossible for a program such as a device driver program for controlling a suspend/resume mechanism which does not perform memory control to do so.

If the conditions (a) and (b) are not satisfied, an attempt to transit an address generation mode may cause a system malfunction. Such a problem is caused when the CPU executes an instruction for transiting the address generation mode, that is, "MOV DRO,EAX" in the above example and then tries to prefetch an instruction preceded by it, that is, "JMP offset value, selector value" in the above example. The problem is avoided if the instruction "JMP offset value, selector value" is already prefetched into the VPU at the time when the instruction "MOV CRO,EAX" for transiting the address generation mode is executed by the VPU.

A prefetch address is basically considered to be calculated based on current values of the CS and IP. However, even if the current values of the CS and IP are the same, the prefetch address (address to be prefetched, that is, memory address in which an instruction to be preread is stored) would be different for each address generation mode since a mechanism for generating a physical address from a logical address is different for each address generation mode. Therefore, after a mode is transited by the execution of "MOVCRO,EAX", a prefetch address calculated based on the CS and IP would become different from a prefetch address calculated based on the same CS and IP before the transition of the mode. This causes control to be transferred to an incorrect address and system hang up to occur, or the system to malfunction or stop if a page corresponding to the calculated address does not exist.

A data processing system such as a battery-driven notebook personal computer, etc., usually provides a suspend/resume mechanism However, even if the suspend state occurs during the operation of system in the protect mode, the 386 reverts to real mode at the time of resumption after power supply is turned off. Therefore, the real mode must be transited to the protect mode for each resumption, typically by a device driver program for controlling the suspend/resume mechanism.

It is accordingly an object of the present invention to provide an improved data processing system with a CPU having plural address generation modes which permits transit between modes without incurring addressing errors.

A method for transiting address generation modes according to the present invention prefetches an instruction to be executed preceded by the execution of an instruction for transiting the address generation modes, into a prefetch queue upon the time when the instruction for transiting the address generation modes is executed. The method therefore can prevent an incorrect instruction from being prefetched to execute instead of an instruction to be executed or control from being transferred to an incorrect address immediately after the transition of the modes.

A data processing system according to the present invention includes a CPU with an address generating mechanism having plural address generation modes and a prefetch queue for storing instructions preread, and memory for retaining instructions to be executed by the CPU and stores a series of instructions, which allow an instruction to be executed immediately an instruction for transiting the address generation modes to be preread and retained in the prefetch queue, in the storage locations of the memory to be prefetched prior to the instruction for transiting the address generation modes.

In order that the invention may be well understood, a preferred embodiment thereof will now be described with reference to the accompany drawings, in which :-
FIG.1 is a flowchart showing procedures in an embodiment of a method for transiting address generation mode in a data processing system according to the present invention.
FIG.2 is a diagram showing an example of f a series of instructions which execute the procedures of the embodiment.
FIG.3 is a block diagram showing an example of the configuration of having a CPU plural address generation modes.
FIG.4 is a flowchart showing procedures for an example of a conventional method for transiting address generation modes.
FIG.5 is a block diagram showing the configuration of a CRO register of the CPU.
FIG.6 is a diagram showing an example of a series of instructions which execute the procedures in the prior art.

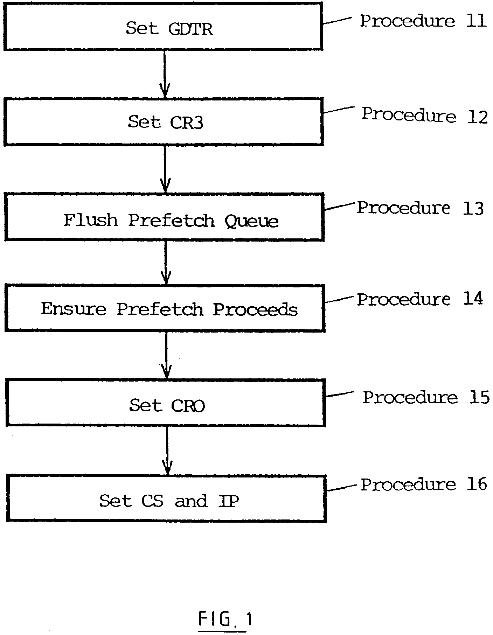

Figure 1 shows in block form a method for transiting address generation modes according to the present invention. Procedures 11, 12, 15 and 16 in FIG.1 are the same as the procedures 1, 2, 3 and 4 in Fig.4 respectively. Accordingly, the embodiment adds procedures 13 and 14 immediately before the procedure 3 of Fig.4. The procedure 13 flushes the prefetch queue 2A. To flush the prefetch queue 2A, an instruction such as a jump or call for changing sequential access to contiguous data storage locations of memory 20 to access to uncontiguous data storage locations are used. The procedure 14 ensures that prefetch proceeds. The prefetch, that is, instruction preread is achieved by the instruction prefetch unit 2 when the bus interface unit 1 is not involved in a bus cycle. Therefore, the procedure 14 executes an instruction which does not cause a bus cycle, while it allows the instruction prefetch unit 2 to have time to spare so that the prefetch queue 2A can be full of instructions.

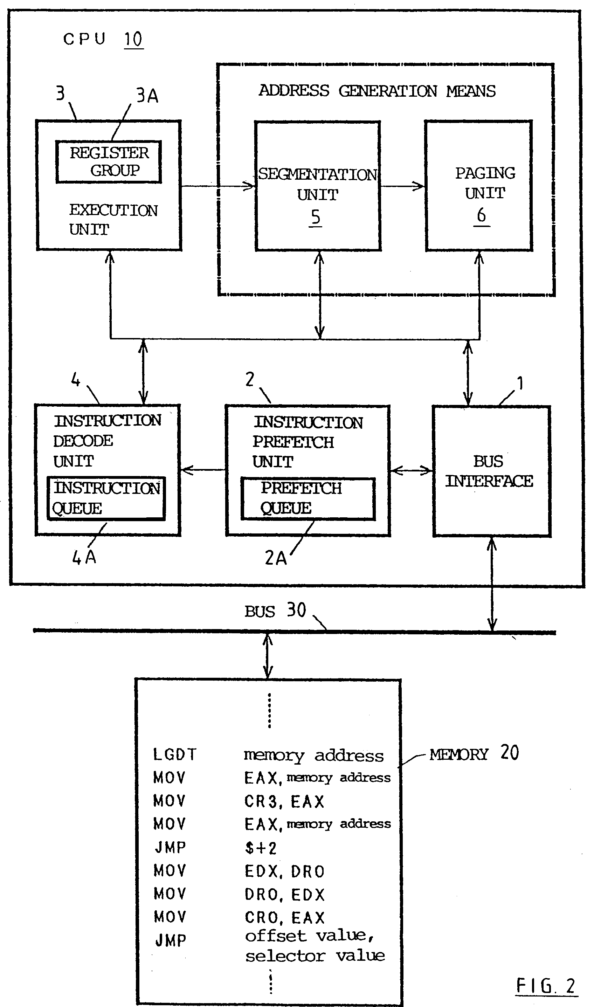

Figure 2 is a block diagram of an embodiment of a data processing system according to the present invention. To simplify explanation, the same numerals are assigned to the same portions as in the prior art discussed above with reference to Figure 3. In the data processing system of Figure 2, the microprocessor (CPU) 10 and the memory 20 are connected, through a bus 30, to each other. Address generation means 12 of the CPU 10 comprises the segmentation unit 5 and the paging unit 6.

As compared with a series of the instructions of Fig.6, a series of instructions in the memory 30 include the addition of the following instructions placed immediately before "MOV CRO,EAX" in the series of the instructions shown in Fig.6.
JMP $+2
MOV EDX,DRO
MOV DRO,EDX

"JMP $+2" is an example of an instruction for the execution of the procedure 13 in Fig.1. The instruction increases a value of the IP register by two bytes. Since 'JMP $+2' itself has a size of two bytes, the execution of "JMP $+2" causes the CPU 10 to merely access to a storage location of the next instruction 'MOV EDX,DRO' in the memory. It is an object of a "JMP $+2" that the execution thereof causes the prefetch queue 2A to be flushed.

"MOV EDX,DRO" and the next "MOV DRO,EDX" are examples of instructions for the execution of the procedure 14 in Fig.4. "MOV EDX,DRO" is a register-to-register transfer instruction for transferring the contents of a DRO register to an EDX register and the next "MOV DRO,EDX" a register-to-register transfer instruction for transferring the content of the EDX register to the DRO register. Accordingly, the execution of "MOV EDX,DRO" and the next "MOV DRO,EDX" causes the contents of the DRO register to be returned to the DRO register after the transfer to the EDX register. The execution of such instructions does not cause access to the bus 30 and comparatively requires more time. Therefore, the instruction prefetch unit 2 can preread and prefetch instructions into the prefetch queue 2A during the execution of such instructions.

Immediately before the "MOV EDX,DRO" and "MOV DRO,EDX" instructions are executed, "JMP &+2" is executed to flush the prefetch queue 2A. Considering a size (depth) of the prefetch queue 2A, "JMP offset value, selector value" stored in a storage location preceded by a location in which "MOV DRO,EDX" is stored, is surely preread and prefetched into the prefetch queue 2A during the execution of "MOV EDX,DRO" and "MOV DRO,EDX".

As described above, according to the present invention, since when the mode transition instruction ("MOV CRO,EAX") is executed, the next instruction ("JMP offset value, selector value") to be executed is already fetched into the prefetch queue 2A, the system hang up which originates in the transfer of control to an erroneous address does not occur immediately after mode transition or the system does not malfunction or stop in the case where a page corresponding to a calculated address does not exist.

The mode transition can be normally executed even if the above conditions (a) and (b) are not satisfied. Therefore, the mode transition can be normally executed independently of the function of OS. In a data processing system including the suspend/resume mechanism in which transition the real mode to the protect mode is needed for each resume, the present invention has an advantage that a resume function can be executed without any error.

In the embodiment, a JMP (unconditional jump instruction) was used to flush the prefetch queue. However, it will be appreciated that any jump instruction other than the unconditional jump instruction or for example a CALL (call instruction) other than the jump instructions may be used, that is, any instruction selected from various instructions for flushing the prefetch queue may be used. Generally, instructions for flushing the prefetch queue transfer control to discontinuous memory addresses.

Further, in the embodiment, preread instructions are retained in the prefetch queue during the execution of the register-to-register transfer between the DRO and EDX registers. However, it will be appreciated that a register-to-register transfer instruction other than the above or an instruction other than register-to-register transfer instructions which does not prevent prefetch may be executed to ensure that the preread instructions are retained in the prefetch queue.

## Claims

1. A method for transiting address generation modes in a data processing system, said system including a Central Processing Unit (CPU) having address generation means providing plural address generation modes, a prefetch queue for storing prefetched instructions and a memory for storing instructions to be executed by said CPU, wherein an instruction to be executed immediately after the execution of an instruction for transiting address generation modes is prefetched into said prefetch queue during the execution of the instruction for transiting the address generation modes.

2. The method for transiting address generation modes according to claim 1, including the step of flushing said prefetch queue and then executing instruction with no bus access before the execution of an instruction for transiting the address generation modes, thereafter fetching an instruction to be executed immediately after the instruction of the instruction for transiting the address generation modes into said prefetch queue.

3. A method for transiting address generation modes in a data processing system, said system having CPU, said CPU having address generation means, said means having plural address generation modes and a prefetch queue for storing instructions prefetched, and memory for storing instructions to be be executed by said CPU, wherein said prefetch queue is already full of instructions upon the time when an instruction for transiting the address generation modes is executed.

4. The method for transiting address generation modes according to claim 3, wherein said prefetch queue is flushed and then instructions with no bus access are executed before the execution of an instruction for transiting the address generation modes, and thereby said prefect queue is already full of instructions upon the time when the instruction for transiting the address generation modes is executed.

5. A data processing system including a central processing unit (CPU) having address generation means providing plural address generation modes, a prefetch queue for storing prefetched instructions, and a memory for storing instructions to be executed by said CPU, including means for storing series of instructions that allow an instruction, to be executed immediately after an instruction for transiting address generation modes, to be prefetched into said prefetch queue in storage locations of said memory to be prefetched before the instruction for transiting the address generation modes.

6. The data processing system according to claim 5, wherein said series of instructions include instructions for flushing said prefetch queue and instructions that do not request bus access during execution.
